# EUROPÄISCHE PATENTANMELDUNG

(11) **EP 1 046 944 A2**
(43) Veröffentlichungstag der Anmeldung: **25.10.2000**
(21) Anmeldenummer: 00105166.3
(22) Anmeldetag: 11.03.2000
(51) Int. Cl.: G02F 1/1335

(54) **Selbstleuchtende LCD-Anzeigevorrichtung**

(30) Priorität: 13.04.1999 DE 19916747
(71) Anmelder: Mannesmann VDO Aktiengesellschaft, 60388 Frankfurt am Main (DE)
(72) Erfinder: Reisinger, Achim, 65719 Hofheim (DE); Rupp, Christoph, 50825 Köln (DE)
(74) Vertreter: Rassler, Andrea, Dipl.-Phys.

(57) **Zusammenfassung**

Die Erfindung betrifft eine selbstleuchtende LCD-Anzeigevorrichtung. enthaltend eine LCD-Baugruppe mit einer ersten Polarisatorschicht (1), einem ersten transparenten Träger (2), einer ersten transparenten Elektrodenschicht (3), einer Flüssigkristallschicht (4), einer zweiten transparenten Elektrodenschicht (5), einem zweiten transparenten Träger (6) und einer zweiten Polarisatorschicht (7) und eine LED-Baugruppe zur Beleuchtung der LCD-Baugruppe mit einer dritten transparenten Elektrodenschicht (9), einer Schicht (10) enthaltend organische lichtemittierende Stoffe, einer vierten Elektrodenschicht (11) und einem Träger (12) sowie gegebenenfalls weiteren zwischen den dritten und vierten Elektrodenschicht enthaltenden Schichten.

Eine erfindungsgemäße selbstleuchtende LCD-Anzeigevorrichtung, die besonders einfach herzustellen ist, zeichnet sich dadurch aus, daß eine der Polarisatorschichten oder, wenn die Polarisatorschicht zwischen Träger und Elektrodenschicht angeordnet ist, der sie tragende Träger der Träger für die dritte transparente Elektrodenschicht ist.

## Beschreibung

Die Erfindung betrifft eine selbstleuchtende LCD-Anzeigevorrichtung.

Es ist, z.B. aus dem Artikel "Application of Polymer Light-emitting Materials in Light-emitting Diodes, Backlichts and Displays" von R.J. Visser in Philips J. Res. 51 (1998) 467-477, bekannt, LCD-Anzeigevorrichtungen durch eine Hinterleuchtung mit flächigen polymeren lichtemittierenden Dioden zu beleuchten. Diese Beleuchtung kann zum einen zur Verstärkung des Kontrasts bei Verwendung der Anzeigevorrichtung bei Tageslicht, zum anderen zur Beleuchtung der Anzeigevorrichtung bei Dunkelheit verwendet werden.

Die Verwendung zweier Baugruppen hat jedoch den Nachteil, daß zusätzliche Montageschritte notwendig sind, die weiterhin sehr schwer auszuführen sind, da die beiden flächigen Elemente sehr eben ausgebildet und genau parallel zueinander ausgerichtet sein müssen, um z.B. die Bildung von Newton-Ringen zu vermeiden.

Aus der US-Patentschrift US-3,811,751 ist eine selbstleuchtende LCD-Anzeigevorrichtung bekannt, die eine LCD-Schicht und ein flaches Elektroluminiszenzelement als Hinterleuchtung aufweist, zwischen denen sich zwei Schichten eines Films zur Beeinflussung des von dem Elektroluminiszenzelement abgestrahlten Lichts mit streifenförmigen, gegenüber der Senkrechten auf die LCD-Anzeigevorrichtung geneigten Mikroblenden befinden. Die Mikroblenden der beiden Filme sind senkrecht zueinander angeordnet. Sie dienen dazu, das von dem Elektroluminiszenzelement abgestrahlte Licht so abzulenken, daß bei einer Beobachtungsrichtung senkrecht zur Fläche der LCD-Anzeigevorrichtung der Hintergrund dunkel erscheint und nur Licht, das durch LCD-Pixel abgelenkt wird, zu dem Beobachter gelangt. Aus anderen, seitlichen Blickrichtungen heraus, kehrt sich der Kontrast jedoch um.

Es ist Aufgabe der Erfindung, eine selbstleuchtende LCD-Anzeigevorrichtung bereitzustellen, die einfach herzustellen und zu montieren ist, und deren Blickwinkelbereich durch den der eigentlichen LCD-Schicht bestimmt ist.

Die Aufgabe wird gelöst durch eine LCD-Anzeigevorrichtung mit den Merkmalen des Anspruchs 1.

Die Polarisatorschichten der LCD-Baugruppe können auf den der Flüssigkristallschicht abgewandten Seite der entsprechenden Träger oder zwischen den Trägern der Baugruppe und den Elektrodenschichten angeordnet sein.

Durch die Idee den der Hinterleuchtung zugewandten Polarisator oder, wenn der Polarisator zwischen Elektrodenschicht und Träger angeordnet ist, den der Hinterleuchtung zugewandten Träger der LCD-Baugruppe als Träger für die transparente Elektrode der LED-Baugruppe zu verwenden, sind Probleme im Zusammenhang mit der Ebenheit und der Paßgenauigkeit der Oberflächen der Beleuchtungseinheit ausgeschlossen. Darüber hinaus wird ein Träger weniger verwendet. Schließlich entfallen die Montageschritte zum Zusammenbau der Elemente.

Bis auf die Anordnung der dritten Elektrodenschicht können die LCD-Baugruppe und die LED-Baugruppe einen dem Stand der Technik entsprechenden Aufbau aufweisen.

Als organische lichtemittierende Stoffe können ansonsten beliebige Stoffe Verwendung finden, wobei lichtemittierende Polymere bevorzugt sind.

Vorteilhafte Weiterbildungen der Erfindung sind in den Unteransprüchen gekennzeichnet.

Bevorzugt weist eine erfindungsgemäße selbstleuchtende LCD-Anzeigevorrichtung ein Dichtungselement auf, das rahmenartig entlang des Umfangs der Fläche der LCD-Baugruppe zwischen dem ersten transparenten Träger und dem zweiten transparenten Träger oder jeweils darauf angeordneten, festen Schichten angeordnet ist. Ebenso ist es zur Erhöhung der Lebensdauer der lichtemittierenden Schicht vorteilhaft, wenn ein Dichtungselement rahmenartig entlang des Umfangs der Fläche der LED-Baugruppe zwischen dem zweiten transparenten Träger und dem dritten Träger oder jeweils darauf angeordneten, festen Schichten angeordnet ist, so daß das Innere luft- und wasserdicht eingeschlossen ist.

Bevorzugt werden die transparenten Elektrodenschichten durch Indium-Zink-Oxid-Schichten (ITO-Schichten) gebildet.

Vorzugsweise sind die transparenten Träger Glasplatten.

Die vierte Elektrodenschicht kann geeignete Metalle, z.B. Aluminium oder Calcium, enthalten.

Zur Erhöhung der Lichtausbeute in Richtung der LCD-Schicht ist die Metallschicht vorzugsweise so ausgebildet, daß sie das emittierte Licht reflektiert. Alternativ kann hinter der Metallschicht eine weitere reflektierende Schicht angeordnet sein oder der Träger aus entsprechend reflektierendem Material sein.

Sind die vierte Elektrodenschicht und der dritte Träger transparent ausgebildet, wird eine transparente Anzeigevorrichtung erhalten.

Die LED- Baugruppe kann zwischen den Elektrodenschichten noch weitere dem Fachmann bekannte Schichten enthalten, die die Funktion dieser Baugruppe verbessern. Bevorzugt ist zur Erhöhung der Lebensdauer zwischen der transparenten Elektrodenschicht in der LED-Baugruppe und der Schicht mit organischen lichtemittierenden Stoffen eine polymere Schutzschicht angeordnet.

Vorzugsweise ist die LED-Baugruppe zur Darstellung verschiedenfarbiger Bereiche ausgebildet, was zum Beispiel durch Bildung entsprechend ansteuerbarer Bereiche mit organischen, Licht unterschiedlicher Farbe emittierenden Stoffen geschehen kann.

Weiterhin bevorzugt ist es, daß die Schicht mit organischen lichtemittierenden Stoffen eine Streifenstruktur aufweist, bei der mindestens zwei Typen von Streifen alternierend angeordnet sind und Streifen eines Typs jeweils organische lichtemittierende Stoffe aufweisen, die Licht einer bestimmten Farbe emittieren, womit eine geeignete Farbmischung des abgestrahlten Lichts erreicht werden kann. Besonders bevorzugt sind die Streifen so schmal, daß sie aus einer typischen Betrachtungsentfernung mit dem menschlichen Auge nicht aufgelöst werden können.

Bevorzugt ist in diesem Fall die dritte oder die vierte Elektrodenschicht entsprechend der Streifenstruktur zur Ansteuerung der Streifen jeweils eines Typs strukturiert, so daß die Farbe der Hinterleuchtung durch die Ansteuerung veränderbar ist. Damit ist, im Gegensatz zu Mehrfarben-Matrixanzeigen, die zur Erzeugung von Mischfarbenlicht benutzt werden, nur die Strukturierung einer Elektrode notwendig, um Mischfarbenlicht zu erzeugen.

Im Betrieb werden die Streifen so angesteuert, daß Licht einer gewünschten Farbe abgestrahlt wird. Für eine bessere Mischung des Lichts kann der zweite transparente Träger als Streuscheibe ausgebildet sein.

Besonders bevorzugt werden mindestens drei Streifentypen verwendet, deren organische lichtemittierende Stoffe so gewählt sind, daß bei geeigneter Ansteuerung die Mischung des abgestrahlten Lichts der Streifen weißes Licht ergibt.

Entspricht hierbei die Breite der Streifen der Größe der Pixel der LCD-Baugruppe und sind die Streifen auf diese Pixel ausgerichtet, so kann besonders bevorzugt, insbesondere bei gleichzeitigem Betrieb aller Streifentypen eine selbstleuchtende Farbanzeigevorrichtug realisiert werden. Dazu braucht die LCD-Baugruppe bis auf die Ansteuerung nur als Monochrom-Anzeigevorrichtung ausgebildet zu sein. Auf ansteuerbare Farbfilter in der LCD-Baugruppe kann ganz verzichtet werden.

Durch die Anordnung der zweiten und dritten ITO-Schicht entfällt in diesem Fall eine schwierige nachträgliche Justierung der LED-Baugruppe mit der LCD-Baugruppe bei einer einfachen Kombination einer LCD-Baugruppe mit einer separaten LED-Baugruppe.

Die LCD-Baugruppe kann aber auch zur Darstellung von mehrfarbigen Anzeigen bei einfarbiger oder weißer Beleuchtung ausgebildet sein. In dieser Ausführungsform ist insbesondere bei Verwendung einer LED-Baugruppe mit Streifenstruktur eine genaue Ausrichtung von Pixeln der LCD-Baugruppe und Streifen der LED-Baugruppe überflüssig.

Ausführungsbeispiele der Erfindung werden an Hand der Figuren beschrieben, in denen
Fig. 1 einen Schnitt durch eine selbstleuchtende LCD-Anzeigevorrichtung nach einer ersten Ausführungsform der Erfindung zeigt, und
Fig. 2 eine Draufsicht auf eine LED-Baugruppe nach einer zweiten Ausführungsform der Erfindung zeigt.

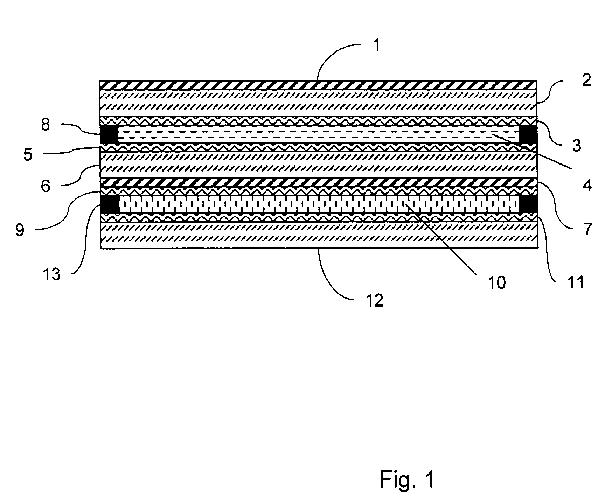

In Fig. 1 weist eine selbstleuchtende LCD-Anzeigevorrichtung eine LCD-Baugruppe mit einer Polarisatorschicht 1, einer als Träger dienenden Glasplatte 2, einer als erste transparente Elektrodenschicht dienende erste ITO-Schicht 3 (Indium-Zink-Oxid-Schicht), eine Flüssigkristallschicht 4, eine als zweite transparente Elektrodenschicht dienende zweite ITO-Schicht 5, eine als zweiter transparenter Träger dienende Glasplatte 6 und eine zweite Polarisatorschicht 7. Die Flüssigkristallschicht 4 wird durch einen als Dichtungselement dienenden Kleberahmen 8, der entlang des Umfangs der LCD-Baugruppe verläuft, luft- und wasserdicht eingeschlossen.

Auf der zweiten Polarisatorschicht 7 ist eine als dritte Elektrodenschicht dienende dritte ITO-Schicht 9, eine lichtemittierende Polymerschicht 10, eine als vierte Elektrodenschicht dienende ITO-Schicht 11 sowie eine als dritter Träger dienende Glasplatte 12 angebracht. Die Schicht mit lichtemittierendem Polymer wird von einem als Dichtungselement dienenden, entlang des Umfangs der LED-Baugruppe verlaufenden zweiten Kleberahmen 13 luft- und wasserdicht eingeschlossen.

Die LCD-Baugruppe wird in der üblichen Art angesteuert, während die LED-Baugruppe auf Dauerbeleuchtung geschaltet ist.

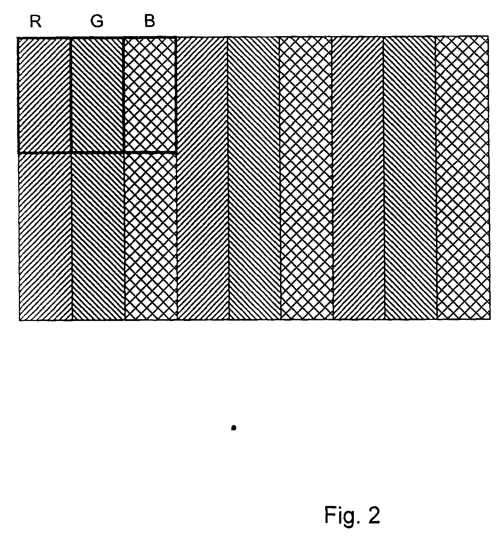

Eine selbstleuchtende LCD-Anzeigevorrichtung nach einer zweiten Ausführungsform der Erfindung hat im wesentlichen den gleichen Aufbau wie die erste Ausführungsform. Bei dieser zweiten Ausführungsform weist jedoch, wie in Fig. 2 gezeigt, die Schicht mit organischen lichtemittierenden Stoffen eine Streifenstruktur auf, bei der drei Typen von Streifen alternierend angeordnet sind; die Typen unterscheiden sich durch die Farbe des von den in den Streifen dieses Typs enthaltenen organischen lichtemittierenden Stoffen abgestrahlten Lichts. Es sind als Farben Rot (R), Grün (G) und Blau (B) vorgesehen, so daß eine Mischung des abgestrahlten Lichts bei geeigneter Ansteuerung weißes Licht ergibt. Die Breite der Streifen ist so gering, daß die Streifenstruktur bei normaler Betrachtung mit dem menschlichen Auge nicht mehr auflösbar ist.

Die dritte Elektrodenschicht ist entsprechend der Streifenstruktur so strukturiert, daß Streifen jeweils eines Typs unabhängig von denen eines anderen Typs ansteuerbar sind. Im Betrieb leuchten alle Streifen gleichzeitig, so daß weißes Licht entsteht. Prinzipiell können durch andere Ansteuerungen aber auch andere Farbmischungen abgestrahlt werden.

Die LCD-Baugruppe hat den Aufbau einer LCD-Anzeigevorrichtung für Monochrombetrieb; die Pixel dieser Anzeigevorrichtung werden hier als Sub-Pixel bezeichnet. Ihre Größe entspricht gerade der Breite eines Streifens und sie sind direkt über den Streifen angeordnet. Wie in der Fig. 2 gezeigt, bilden drei über benachbarten Streifen angeordnete Sub-Pixel R, G, B ein Pixel des anzuzeigenden Bildes. Vorzugsweise ist das Seitenlängenverhältnis der Sub-Pixel so gewählt, daß das durch sie gebildete Pixel gleiche Seitenlängen hat. Da die Sub-Pixel konstant beleuchtet werden, kann durch Einstellung ihres Durchlaßvermögens, die Farbe eines Pixels durch Mischung der Lichtstärken der drei Sub-Pixel mit roter, grüner und blauer Farbe eingestellt werden. So erhält man einfach eine selbstleuchtende Farb-LCD-Anzeigevorrichtung.

Dadurch, daß die zu strukturierende dritte (für die LED-Baugruppe) und zweite Elektrodenschicht (für die LCD-Baugruppe) auf einem Träger angebracht sind, können die Streifen und die Sub-Pixel sehr genau schon bei der Herstellung, z.B. durch Durchführung des Strukturierungsschritts von beiden Seiten aufeinander ausgerichtet werden.

## Patentansprüche

1. Selbstleuchtende LCD-Anzeigevorrichtung enthaltend eine LCD-Baugruppe mit einer ersten Polarisatorschicht (1), einem ersten transparenten Träger (2), einer ersten transparenten Elektrodenschicht (3), einer Flüssigkristallschicht (4), einer zweiten transparenten Elektrodenschicht (5), einem zweiten transparenten Träger (6) und einer zweiten Polarisatorschicht (7) und eine LED-Baugruppe zur Beleuchtung der LCD-Baugruppe mit einer dritten transparenten Elektrodenschicht (9), einer Schicht (10) enthaltend organische lichtemittierende Stoffe, einer vierten Elektrodenschicht (11) und einem Träger (12) sowie gegebenenfalls weiteren zwischen den dritten und vierten Elektrodenschicht enthaltenden Schichten, **dadurch gekennzeichnet,** daß eine der Polarisatorschichten oder, wenn die Polarisatorschicht zwischen Träger und Elektrodenschicht angeordnet ist, der sie tragende Träger der Träger für die dritte transparente Elektrodenschicht ist.

2. Selbstleuchtende LCD-Anzeigevorrichtung nach Anspruch 1, **dadurch gekennzeichnet,** daß ein Dichtungselement (8) rahmenartig entlang des Umfangs der Fläche der LCD-Baugruppe zwischen dem ersten transparenten Träger (2) und dem zweiten transparenten Träger (6) oder jeweils darauf angeordneten, festen Schichten (1,3,5,7) angeordnet ist.

3. Selbstleuchtende LCD-Anzeigevorrichtung nach Anspruch 1 oder 2, **dadurch gekennzeichnet,** daß ein Dichtungselement (13) rahmenartig entlang des Umfangs der Fläche der LED-Baugruppe zwischen dem zweiten transparenten Träger (6) und dem dritten Träger (12) oder jeweils darauf angeordneten, festen Schichten (7,9,11) angeordnet ist, so daß das Innere luft- und wasserdicht eingeschlossen ist.

4. Selbstleuchtende LCD-Anzeigevorrichtung nach einem der vorhergehenden Ansprüche, **dadurch gekennzeichnet,** daß die transparenten Träger (2,6) Glasplatten sind.

5. Selbstleuchtende LCD-Anzeigevorrichtung nach einem der vorhergehenden Ansprüche, **dadurch gekennzeichnet,** daß der Träger (6) von LED- und LCD- Baugruppe gleichzeitig als Polarisator wirkt und die Polarisatorschicht (7) darauf fehlt.

6. Selbstleuchtende LCD-Anzeigevorrichtung nach einem der vorhergehenden Ansprüche, **dadurch gekennzeichnet,** daß der dritte Träger (12) transparent ist.

7. Selbstleuchtende LCD-Anzeigevorrichtung nach einem der vorhergehenden Ansprüche, **dadurch gekennzeichnet,** daß die vierte Elektrodenschicht (11) transparent ist.

8. Selbstleuchtende LCD-Anzeigevorrichtung nach einem der Ansprüche 1 bis 4, **dadurch gekennzeichnet,** daß die vierte Elektrodenschicht (11) eine Metallschicht ist.

9. Selbstleuchtende LCD-Anzeigevorrichtung nach einem der vorhergehenden Ansprüche, **dadurch gekennzeichnet,** daß die transparenten Elektrodenschichten (3,5,9) Indium-Zink-Oxid (ITO) enthalten.

10. Selbstleuchtende LCD-Anzeigevorrichtung nach einem der vorhergehenden Ansprüche, **dadurch gekennzeichnet,** daß zwischen der transparenten Elektrodenschicht (9) in der LED-Baugruppe und der Schicht (10) mit organischen lichtemittierenden Stoffen eine polymere Schutzschicht angeordnet ist.

11. Selbstleuchtende LCD-Anzeigevorrichtung nach einem der vorhergehenden Ansprüche, **dadurch gekennzeichnet,** daß die LED-Baugruppe zur Darstellung verschiedenfarbiger Bereiche ausgebildet ist.

12. Selbstleuchtende LCD-Anzeigevorrichtung nach einem der vorhergehenden Ansprüche, **dadurch gekennzeichnet,** daß die Schicht (11) mit organischen lichtemittierenden Stoffen eine Streifenstruktur (R,G,B) aufweist, bei der mindestens zwei Typen von Streifen alternierend angeordnet sind und Streifen eines Typs jeweils organische lichtemittierende Stoffe aufweisen, die Licht einer bestimmten Farbe emittieren.

13. Selbstleuchtende LCD-Anzeigevorrichtung nach Anspruch 12, **dadurch gekennzeichnet,** daß die dritte oder die vierte Elektrodenschicht (11) entsprechend der Streifenstruktur zu Ansteuerung der Streifen jeweils eines Typs strukturiert ist.

14. Selbstleuchtende LCD-Anzeigevorrichtung nach Anspruch 12 oder 13, **dadurch gekennzeichnet,** daß die Breite der Streifen der Breite der Pixel der LCD-Baugruppe entspricht und daß die Streifen auf diese Pixel ausgerichtet sind.

15. Selbstleuchtende LCD-Anzeigevorrichtung nach Anspruch 12, 13 oder 14, **dadurch gekennzeichnet,** daß mindestens drei Streifentypen verwendet sind, deren organische lichtemittierende Stoffe so gewählt sind, daß bei geeigneter Ansteuerung die Mischung des abgestrahlten Lichts der Streifen weißes Licht ergibt.

16. Selbstleuchtende LCD-Anzeigevorrichtung nach einem der vorhergehenden Ansprüche, **dadurch gekennzeichnet,** daß die LCD-Baugruppe bis auf die Ansteuerung als Monochrom-Anzeigevorrichtung ausgebildet ist.

17. Selbstleuchtende LCD-Anzeigevorrichtung nach einem der vorhergehenden Ansprüche, **dadurch gekennzeichnet,** daß die LCD-Baugruppe zur Darstellung von mehrfarbigen Anzeigen bei einfarbiger oder weißer Beleuchtung ausgebildet ist.
